# EUROPEAN PATENT APPLICATION

(11) **EP 1 293 484 A1**
(43) Date of publication of application: **19.03.2003**
(21) Application number: 01870196.1
(22) Date of filing: 13.09.2001
(51) Int. Cl.: C02F 3/12, C02F 3/30, C02F 1/36, C02F 1/78

(54) **Process and an apparatus for biological treatment of aqueous organic wastes**

(71) Applicant: SEGHERS BETTER TECHNOLOGY GROUP, 2830 Willebroek (BE)
(72) Inventor: Koning, Jan, 3140 Keerbergen (BE); Wang, Lin, Harbin 150006 (CN); Wang, Baozhen, 150006 Harbin (CN)
(74) Representative: Brants, Johan Philippe Emile

(57) **Abstract**

The invention relates to a biological nutrients removal process of an aqueous organic waste in the presence of a biosludge, comprising the steps of:
- subjecting the aqueous organic waste to an aerobic biological treatment in the presence of said biosludge (4),
- a solid/liquid separation of the aerated aqueous suspension into a liquid fraction and a sludge fraction (5),
- discharging the separated liquid fraction as treated water (23)
- mechanical or chemical decomposing at least a portion of the separated sludge fraction resulting in the release of the supplementary of BOD and COD (7), and
- recycling at least a portion of the decomposed sludge to the first step of aerobic biological treatment (10)
wherein the amount of BOD and COD generated is dependent upon the amount of nutrient to be removed in the separated liquid fraction.

The invention further relates to an apparatus for a biological nitrogen removal process of an aqueous organic waste in the presence of a biosludge comprising aerobic microorganisms.

## Description

### FIELD OF THE INVENTION

The present invention relates to a process and an apparatus for biological treatment of aqueous organic wastes in which the wastes are treated in the presence of a biosludge containing living aerobic microorganisms. In particular, the present invention relates to a process and an apparatus, in which the amount of excess sludge in the aerobic biological treatment system is be reduced and yet more in particular wherein no biological excess sludge is produced and at the same operation incorporates nutrient removal.

### BACKGROUND OF THE INVENTION

An aerobic biological treatment of aqueous organic wastes by treating them under an aerobic condition by making use of the actions of aerobic microorganisms, as in an activated sludge treatment, permits a low cost treatment with a superior treatment performance and has found a wide use in general. It suffers, however, from a problem of the occurrence of a large amount of "excess sludge", which is difficult to dewater. This excess sludge may amount to about 30-80% by weight of the reduced BOD and the disposal thereof is difficult. Heretofore, the excess sludge has been mainly disposed of by depositing it in a landfill. It has recently become more and more difficult to reserve such a landfill site and, thus, a reduction of the amount of excess sludge is required.

A process has been proposed for reducing the amount of excess sludge in an aerobic biological treatment of an aqueous organic waste by subjecting the biosludge formed therein to an ozone treatment and returning the resulting treated sludge to the aerobic biological treatment step (for example EP 0645347 A1. This prior technique can reduce the amount of the biosludge formed during the aerobic biological treatment by subjecting the biosludge to an ozone treatment to convert it into an easily biodegradable product to be metabolized by aerobic microorganisms as a BOD source, whereby it may eventually be attainable to reduce the amount of formed excess sludge to zero.

In such a treating technique, the ozone treatment is realized by blowing an ozone-containing gas into a biosludge-containing liquid to cause the ozone to contact with the biosludge. When an ozone-containing gas is blown into a biosludge-containing liquid, the liquid becomes viscous and easily foamable due to the oxidative degradation of the biosludge, whereby the entire biosludge-containing liquid in the ozone-treating vessel will become filled with a foam layer. Even if the ozone-containing gas is further blown thereinto in this state, it is difficult to increase the gas/liquid contacting efficiency by a further fine disintegration of bubbles and, thus, any higher ozone absorption rate may not be attained.

Therefore, it is necessary, for attaining a high ozone absorption rate, to further disintegrate the bubbles of the ozone-containing gas, where for a technique of blowing an ozone-containing gas into the biosludge-containing liquid through a porous gas diffuser plate may be employed. Here, however, bacteria will grow due to the conversion of the biosludge into an easily biodegradable product, despite the ozone exhibiting a bactericidal action. This will bring about the adhesion of a biofilm onto the diffuser plate to cause the blockage thereof, so that the introduction of the ozone-containing gas there through may not be allowed to be maintained for a long period of time.

U.S. Pat. No. 6,086,766 describes a process and an apparatus for a biological treatment of aqueous organic wastes, which enables the ozone absorption rate to be maintained at a higher value and to realize an uninterrupted long-lasting introduction of the ozone-containing gas by introducing the ozone-containing gas so as to form finely disintegrated bubbles. Said known process is characterized in that the ozonized biosludge-containing liquid is passed in a downward flow through a pipe at a gas/liquid flow rate ratio in the range of 0.1 to 1 and a gas linear velocity of 0.4-4 m/sec and introduced into the ozone-treatment vessel in such a state that the ozone-containing gas is dispersed as finely disintegrated bubbles within the biosludge-containing liquid so that the biosludge-containing liquid contacts with the ozone-containing gas.

Furthermore in said process the ozone treatment step is realized at a pH of 5 or lower.

All these processes have in common that the mitigation of excess biosludge quantities occurs with none or only limited attention to the removal of nutrients (N nitrogen and P phosphorus) from the wastewater. The quantity or load of the COD and BOD from sludge oxidation/disintegration processes, returned to the bioreactor, has no relation with the quantity or load of the nutrients to be removed in the wastewater treatment plant. The main object of the present invention is to provide a process and apparatus for the biological treatment of aqueous organic wastes wherein no biological excess sludge is produced and providing a high nutrient removal efficiency.

### DISCLOSURE OF THE INVENTION

In general the process is a biological nutrient removal process of an aqueous organic waste in the presence of a biosludge, comprising the steps of:
- subjecting the aqueous organic waste to an aerobic biological treatment in the presence of said biosludge,
- a solid/liquid separation of the aerated aqueous suspension into a liquid fraction and a sludge fraction,
- discharging the separated liquid fraction as treated water and the sludge fraction,
- mechanical or chemical decomposing at least a portion of the separated sludge fraction resulting in the release of supplementary of BOD and COD, and
- recycling at least a portion of the decomposed sludge to the first step of aerobic biological treatment,
wherein the amount of BOD and COD generated is dependent upon the amount of nutrient to be removed in the separated liquid fraction. The control of the amount of the released BOD and COD as a function of the concentration of the nutrient make it possible to operate in a zero excess sludge condition while at the same time have a high performant nutrient removal. In particular the nutrient consist essentially of nitrogen and/or phosphorus compounds.

Preferred embodiments include further the features that decomposition step is a destructive treatment using mechanical and/or acoustic means and/or an oxidation treatment with an oxidation agent such as ozone or hydrogen peroxide, possibly in combination with a catalyst.

A further preferred process comprises a step measuring the amount of nutrients present in the separated liquid fraction, and more preferably in a continuous manner, such that the amount of released BOD and COD can be monitored and if necessary the rate of decomposition can be adjusted as a function of the demand in BOD and COD needed for complete nutrient removal.

If necessary the process may comprise a step of introducing a separate sludge stream in the mechanical or chemical decomposing step for adjusting the amount of BOD and COD.

In another aspect of the invention an apparatus is provided for a biological nitrogen removal process of an aqueous organic waste in the presence of a biosludge comprising aerobic microorganisms, comprising:
- an aerobic biological treatment unit for subjecting the aqueous organic waste supplied to the aeration tank to an aerobic biological treatment in the presence of a biosludge composed essentially of aerobic microorganisms,
- a solid/liquid separation unit for subjecting the aerated aqueous suspension in the aeration tank to solid/liquid separation, exhausting means for the liquid fraction as the treated water and recycling means for at least a portion of the separated sludge fraction,
- a decomposition container for decomposing the sludge fraction, and
- control means for controlling the amount of N and P in the final effluent.

Preferred apparatuses do incorporate several features of the Unitank® concept such as disclosed in BE 899 757 or in the filed but at the filing date of the present invention not yet published application PCT/BE01/00113, both applications are hereby incorporated by reference.

In a preferred embodiment the aeration tank comprises separate anoxic and anaerobic basin. In a more preferred embodiment the aerobic biological treatment unit consists essentially of an rectangular reactor divided in at least two sequentially arranged, hydraulically connected multi functional compartments, whereby said compartments have a dual function in the course of the purification process, being alternatively as aeration compartment and settling compartment.
The compartments can be arranged in a square configuration or in a circular configuration, both with each compartment in a separate cylindrical basin or with each compartment as a section of one single cylindrical basin.

The aqueous organic wastes to be treated according to the present invention are aqueous wastes which contain organic substances capable of being treated by commonly employed aerobic biological treatment techniques and which may contain also some other difficulty biodegradable organic substances and even inorganic substances. Examples of such aqueous organic wastes include sewage, waste liquids from food and drink manufacturing factories or chemical industries and various industrial aqueous wastes.

According to the present invention, aqueous organic wastes are subjected to an aerobic biological treatment in the presence of a biosludge containing aerobic microorganisms. For such a treatment, while standard techniques for aerobic biological treatment with an activated sludge, which comprise the steps of bringing the aqueous organic waste into contact with the activated sludge in an aeration tank under aeration, subjecting the resulting aqueous suspension to a solid/liquid separation in a solid/liquid separation unit and returning a part of the so-separated biosludge to the aeration tank, may be employed in general, other techniques on modifications of these standard techniques may also be employed.

According to the present invention, a part of the biosludge is withdrawn from the system for the aerobic biological treatment and the withdrawn biosludge is subjected to an ozone treatment. While it is preferable in effecting the biosludge withdrawal to withdraw a part of the biosludge separated in the solid/liquid separation unit, it may be permissible to withdraw the biosludge in the form of a water/sludge mixture from the aeration tank. The quantity of sludge to be withdrawn will correspond on average to the excess sludge produced by the biotreatment. However, if the demand for BOD and COD for removal of nutrients is temporarily higher, the amount of sludge to be withdrawn can exceed the excess sludge production. Inversely, when the demand for BOD and COD for removal of nutrients is lower, the amount of sludge to be withdrawn can be decreased and the excess sludge is stored in the biotreatment. On average, the amount of excess sludge can reach zero according the conditions of the invention.

The ozone treatment may be effected in an acidic condition in a suitable pH. As the ozone source, not only ozonized oxygen gas, but also ozonized air, may be employed.

Another oxidation/disintegration medium is hydrogen peroxide. Also a catalyst can be used with the oxidising agent.

The amount of ozone to be introduced may preferably be adjusted at a suitable value per gram of VSS (volatile suspended solids), but shall be minimum 0.01 g0₃/gVSS. When sludge is ozonized, not only BOD but also the nutrients in the cell will be solubilised. Applying a higher ozone dose will result in an increased breakdown of the cellular material and therefore will increase the BOD released from the sludge. As a consequence, this will increase the BOD/N and BOD/P ratios of the treated sludge mixture. This increase of the ozone dose can thus be done when more BOD is needed in the biotreatment. By the ozone treatment, the biosludge is subjected to an oxidative biodegradation and is converted into BOD and COD components. The quantity or load of the COD and BOD from the treated sludge returned to the bioreactor is controlled in order to achieve the required removal of nutrients. The main advantage of the present invention is that the BOD which is released (solubilised) during the biosludge oxidation/disintegration is available for denitrification and dephosphorization allowing the removal of nitrogen and phosphorus. It is commonly known, that for the biological removal of N and P a minimum quantity of readily available COD is required. This quantity depends on the circumstances. In order to reach high nutrient removal efficiencies either the biotreatment process is optimized to nutrient removal with a sludge production as a given parameter, or external carbon sources are required that may increase the sludge production and represent an additional cost. The adjustment of the amount of sludge oxidized is varied according to the amount of BOD required for nutrient removal. In other words, both the quantity of sludge to be oxidized and the extent of oxidation can be tapered to the required amount of rapidly assimilisable carbon for nitrogen and/or phosphorus removal. The particularity of the process compared to other processes with chemical sludge oxidation is on one hand the use of a device to control and limit the growth of biomass, for instance a membrane with or without combination with a fixed carrier for growth of the biomass and on the other hand the adjustment of the amount of sludge oxidized according to the amount of organic material required for nutrient removal. When the sludge is submitted to anaerobic conditions, the biomass releases phosphate, which comes into solution. In order to avoid the phosphate from accumulating in the process, a fraction of the water/sludge mixture can be withdrawn during this phase to remove the phosphorus. This can be achieved by sending this liquid to a side treatment consisting of a first separate settling device, which separates the sludge from the liquid. The sludge is then returned to the biotreater, while the clear water is treated with calcium or metals salts like iron or aluminium in order to separate the phosphates. The treated water is then again sent to a second settler; the phosphate salt is disposed, while the water returns to the biotreater. Only a fraction of the total flow must be treated in this side-treatment (typically 1-15%). This side-treatment offers the advantage of definitively removing phosphorus from the system, in contrast to conventional sludge treatment systems like thickeners, wherein an uncontrolled release of P is observed and a large amount of P is returned to the biotreater.

By performing the aerobic biological treatment of the ozonized sludge through introduction into the aeration tank in the aerobic biological treatment step, the easily biodegradable products which have been converted into BOD and COD components by the ozone treatment are easily removed under biodegradation. By this, a high water quality is attained with the simultaneous reduction in the amount of the sludge discharged out of the system.

### BRIEF EXPLANATION OF THE DRAWINGS

FIG. 1 is a schematic flow diagram showing an embodiment of the treatment apparatus according to the invention.

FIG. 2 is a schematic flow diagram of another embodiment of the treatment apparatus according to the invention incorporated in the Unitank® systems owned by the present applicant.

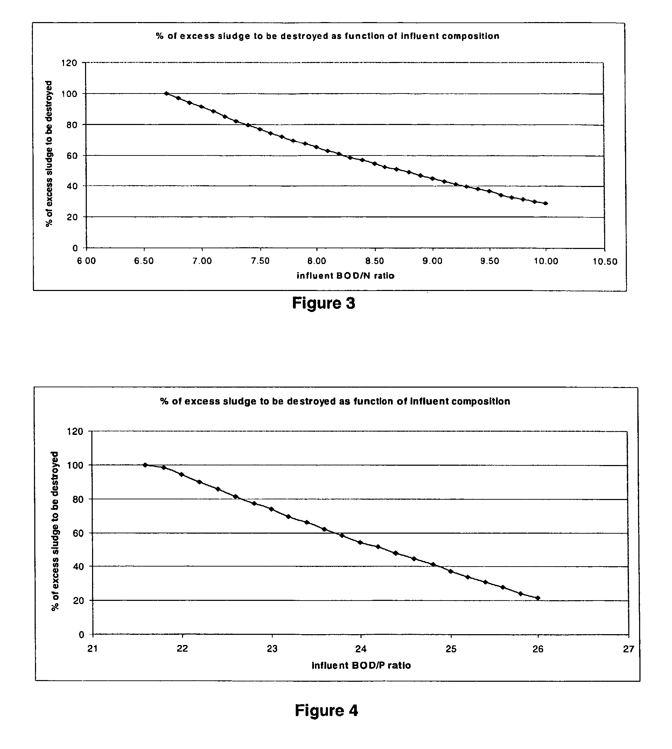

FIG. 3 shows the increase of the fraction of excess sludge to be treated when the BOD/N ratio decreases

FIG. 4 shows the increase of the fraction of excess sludge to be treated when the BOD/P ratio decreases.

### DETAILED DESCRIPTION OF THE INVENTION

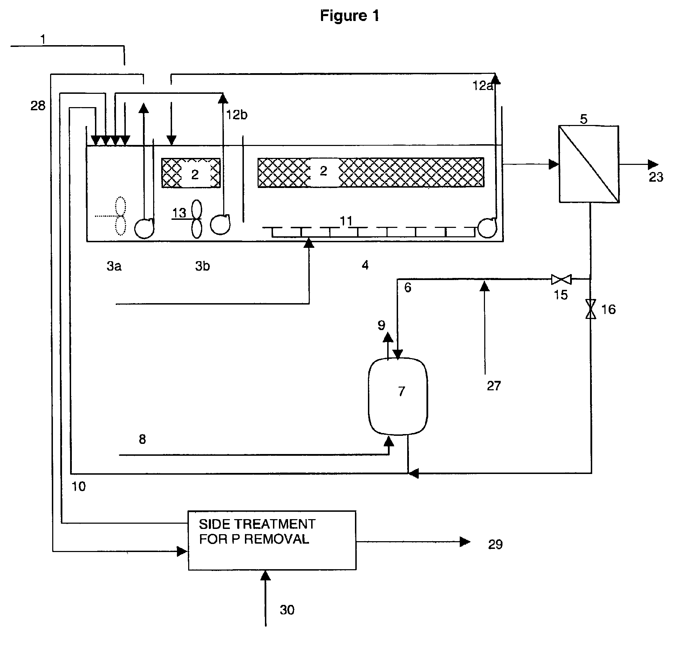

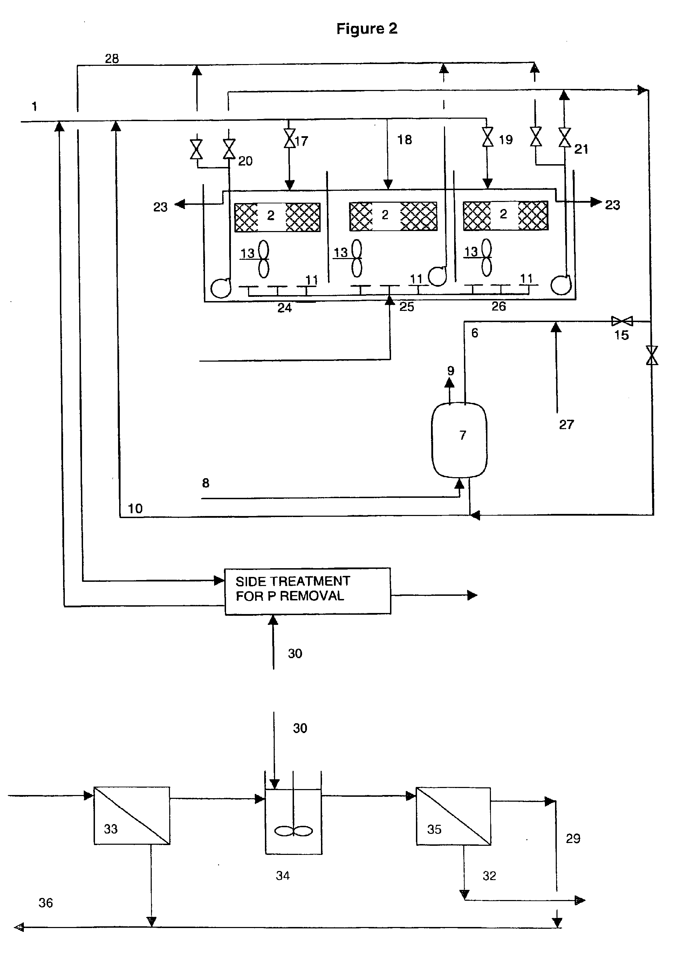

FIGS. 1 and 2 each show a preferred embodiment of the treatment apparatus according to the present invention.

### 1. Conventional system:

The influent comes into basin 3a, which is an anaerobic basin. This basin can be equipped with a mixer or can have a plug flow configuration, without mixer. From this anaerobic basin, the water/sludge mixture flows to the denitrification basin 3b, which is equipped with a mixer 13. This basin is used as denitrification basin; the major part of the biomass is growing on the submerged fixed carrier 2. The liquid flows to the aeration basin 4, which is equipped with air diffusers 11. The nitrifying sludge grows on the submerged fixed carrier 2. The nitrate containing water/sludge mixture is pumped to the first compartment 3 via line 12a. The nitrate free water/sludge mixture is then pumped from the outlet of the denitrifying basin 3b to the inlet of anaerobic basin 3a via line 12b. The biomass which does not grow on the fixed carrier is pumped from basin 4 to basin 3b and from basin 3b to basin 3a in order to achieve biological phosphorus removal. The sludge which may be washed out of the carrier 2 in basin 4 is separated in the separation device 5, which can be a gravitational settler or a filtration process such as a membrane filtration process. This sludge separation can be performed in a separate unit or can be incorporated in the aeration basin. The settled sludge is pumped via line 6 to the oxidation reactor 7, where it is put into contact with an oxidizing agent (preferably ozone or hydrogen peroxide, coming from line 8). If ozone is used, the exhaust gases are discharged via line 9. The oxidized sludge is returned to basin 3 via line 10.

The amount of sludge to be oxidized is determined according to the N and/or P analyses in the effluent 23 by adjusting the flow to the oxidation reactor 7 through valves 15 and 16. If no additional carbon source is required, valve 16 is opened and the oxidation reactor is bypassed, reducing the consumption of oxidizing agent. The use of a fixed carrier 2 reduces the of excess sludge production, allowing the temporary accumulation of sludge in the basins 3 and 4. Once the N and/or P charge in the influent 1 increases, the feed to the oxidation reactor is increased again.

If required, external sludge can be added through line 27 in order to supply extra BOD for removal of N and P.

The water/sludge mixture containing in basin 3a, which contains high amounts of phosphorus, is pumped via line 28 to the phosphorus removal process. This unit is described below.

### 2. UNITANK® system

The influent comes into basins 24, 25 or 26, according to the phase of the UNITANK® cycle. Each basin is equipped with a mixer 13 and with air diffusers 11. Each basin has the possibility to function as an aeration basin for nitrification, an anoxic basin for denitrification basin or an anaerobic basin for phosphorus removal according to the cycle phase. Moreover, the two outer basins 24 and 26 can also act as a settling basin. The biomass is growing on a submerged fixed carrier 2. In contrast to the conventional system, there is no need to recycle the sludge from one basin to the other as all consecutive cycles for nutrient removal are performed in each individual basin. As a result, all biomass may grow on the fixed carrier and no sludge needs to stay in suspension. The excess sludge which may be formed is pumped from the outer compartments 20 and 22 via line 6 to the oxidation reactor 7, where it is put into contact with an oxidizing agent (preferably ozone or hydrogen peroxide, coming from line 8). If ozone is used, the exhaust gases are discharged via line 9. The oxidized sludge is returned to basins 24,25,26 via line 10.

The amount of sludge to be oxidized is determined according to the N and/or P analyses in the effluent 23 by adjusting the flow to the oxidation reactor 7 through valves 15 and 16. If no additional carbon source is required, valve 16 is opened and the oxidation reactor is bypassed, reducing the consumption of oxidizing agent. The use of a fixed carrier 2 reduces the of excess sludge production, allowing the temporary accumulation of sludge in the basins 24,25,26. Once the N and/or P charge in the influent 1 increases, the feed to the oxidation reactor is increased again. The separation of the sludge can be performed by gravity settling or by filtration and in this separation can take place in the biological unit or in a separate unit.

During the anaerobic phases, the water/sludge mixture contains a lot of phosphorus and the water/sludge mixture can be pumped from each individual basin to the side treatment for phosphorus removal, which is described below.

If required, external sludge can be added through line 27 in order to supply extra BOD for removal of N and P.

### 3. Side stream treatment for phosphorus removal

The side stream treatment for phosphorus removal consists of the settling devices and a mixing device. The phosphate rich water/sludge mixture is pumped to the first separation device 33, where the sludge is returned to the biotreater via line 31.The water is mixed with a metal salt or with lime in order to precipitate the phosphate; this can be done in a mixing tank 34 or in-line. The insoluble phosphate salt is then separated in a separation device 35; the salt is removed via line 32 and is discharged separately; the effluent 29 flows back to the biotreated together with the biological sludge 31.

If a gravitatary settler is used, settler 35 will be smaller than settler 33 as the phosphate salt settles faster than the biological sludge.

If an acid salt like iron chloride is used for precipitation of the phosphate, the pH of the treated liquid 29 may decrease. However, this will not affect the pH of the liquid in the biotreater thanks to the buffering capacity of the aerated water and due to the fact that only a part of the influent flow (typically 10-40% of the influent flow) is treated in the side stream treatment.

### EXAMPLES ACCORDING TO THE INVENTION

Two examples are shown hereunder, both applied on an influent with a composition consisting of 480 mg/l BOD, 48 mg/l Ntot (BOD/N ratio = 10) and 18 mg/l Ptot (BOD/P ratio = 26) and for which the effluent limits of 10 mg/l Ntot and 1 mg/l Ptot must be reached, while using the process parameters wherein the sludge yield is 0.4 g MLSS/gBOD, the N content of the sludge is 5 gN/100 gMLSS, the P content of the sludge is 5 gP/100 gMLSS, the required ratio BOD/N for denitrification is 4 gBOD/gN and the BOD released during ozonation is 0.6 g BOD/gMLSS.

For this example, 26% of the excess sludge is preferably sent to the ozonation treatment.

It is shown that the system offers the possibility to comply with severe effluent limits even when the influent has unfavorable BOD/N and BOD/P ratios and that it is applicable within a given range of ratios.

The advantages of the present invention over other "zero sludge" processes are:
- very low sludge production thanks to the principle of sludge mitigation in the biological process,
- further reduction of the sludge production by oxidation of the remaining excess sludge with oxidizing agents (preferably ozone or hydrogen peroxide),
- use of the released rapidly assimilisable COD coming from the oxidation reactor for advanced nitrogen and/or phosphorus removal in the biological process, omitting the need for addition of any external carbon source,
- control of the amount of sludge to be oxidized as a function of the amount of supplementary BOD required for nutrient removal, or in other words, as a function of the BOD/N and BOD/P ratios of the influent,
- limited operation cost compared to other combinations of biological treatment and oxidation processes thanks to the limited need for sludge oxidation/disintegration.
An appartent advantage of removing excess sludge in a classical system is the potential of removing simultaneously compounds that are not biodegraded and are adsorbed to or absorbed in the excess sludge. A zero sludge process may lead to a slip through of such compounds to discharge with the effluent. However the probability that these compounds are broken down in the present process are considerably higher, for following reasons:
- the use of a sludge mitigation system will increase the sludge age, allowing the development of a biomass which is adapted to the breakdown of those compounds.
- an accumulation of these compounds in the system will result in an increased oxidation, making them available for biotreatment.

## Claims

1. A biological nutrients removal process of an aqueous organic waste in the presence of a biosludge, comprising the steps of:
- subjecting the aqueous organic waste to an aerobic biological treatment in the presence of said biosludge,
- a solid/liquid separation of the aerated aqueous suspension into a liquid fraction and a sludge fraction,
- discharging the separated liquid fraction as treated water
- mechanical or chemical decomposing at least a portion of the separated sludge fraction resulting in the release of supplementary of BOD and COD, and
- recycling at least a portion of the decomposed sludge to the first step of aerobic biological treatment,
wherein the amount of BOD and COD generated is dependent upon the amount of nutrient to be removed in the separated liquid fraction.

2. A process according to claim 1, wherein the decomposition step is a destructive treatment using mechanical and/or acoustic means.

3. A process according to claim 1, wherein the decomposition step comprises an oxidation treatment with an oxidation agent such as ozone or hydrogen peroxide optionally in the presence of a catalyzing agent.

4. A process according to any of claims 1-3, wherein the nutrient consists essentially of nitrogen and/or phosphorus compounds.

5. A process according to claims 1-4, wherein a part of the water/sludge mixture is removed during the anaerobic phase or in the anaerobic compartment of the biotreatment and is sent to a separate treatment for removal of the phosphorus with addition of chemicals, while the sludge and water are returned to the biotreater.

6. A process according to any of claims 1-5, further comprising a step measuring the amount of nutrients present in the separated liquid fraction.

7. A process according to any of claims 1-6, further comprising a step for adjusting the rate of the decomposition as a function of the demand in BOD and COD needed for the improved nutrient removal.

8. A process according to any of claims 1-7, further comprising a step for adjustment of introducing a separate sludge stream in the mechanical or chemical decomposing step for adjusting the amount of BOD.

9. A process according to any of claims 1-8, further comprising the supporting of the biosludge on supporting means.

10. An apparatus for a biological nitrogen removal process of an aqueous organic waste in the presence of a biosludge comprising aerobic microorganisms, comprising:
- an aerobic biological treatment unit for subjecting the aqueous organic waste supplied to the aeration tank to an aerobic biological treatment in the presence of a biosludge composed essentially of aerobic microorganisms,
- a solid/liquid separation unit for subjecting the aerated aqueous suspension in the aeration tank to solid/liquid separation, exhausting means for the liquid fraction as the treated water and recycling means for at least a portion of the separated sludge fraction,
- a decomposition container for decomposing the sludge fraction, and
- control means for controlling the amount of N and P in the final effluent.

11. Apparatus according to claim 10, wherein the aeration tank comprises separate anoxic and anaerobic basins.

12. Apparatus according to claim 10 or 11, wherein the aerobic biological treatment unit consists essentially of a rectangular reactor divided in at least two sequentially arranged, hydraulically connected multifunctionals compartments, whereby said compartments have a dual function in the course of the purification process, being alternatingly as aeration compartment and settling compartment.

13. Apparatus according to claim 12, wherein the compartments are arranged in a circular configuration.
